# EUROPÄISCHE PATENTSCHRIFT

(11) **EP 2 777 969 B1**
(45) Veröffentlichungstag und Bekanntmachung des Hinweises auf die Patenterteilung: **09.09.2015**
(21) Anmeldenummer: 13159211.5
(22) Anmeldetag: 14.03.2013
(51) Int. Cl.: B60K 15/03, F17C 5/00

(54) **Drucktankvorrichtung**
Pressure tank device
Dispositif de réservoir de pression

(43) Veröffentlichungstag der Anmeldung: 17.09.2014
(73) Patentinhaber: Magna Steyr Fahrzeugtechnik AG & Co KG, 8041 Graz (AT)
(72) Erfinder: Maurer, Johannes, 8130 Frohnleiten (AT); Stübing, Andreas, 8042 Graz (AT); Zmugg, Rudolf, 8055 Graz (AT)
(74) Vertreter: Zangger, Bernd

(56) Entgegenhaltungen:
- EP-A1- 1 800 930
- US-A1- 2002 096 212
- US-B1- 6 390 075

## Beschreibung

### Gebiet der Erfindung

Die vorliegende Erfindung betrifft eine Drucktankvorrichtung umfassend einen Drucktank, einen Hochdruckeingang zum Drucktank und einen Niederdruckausgang vom Drucktank. Derartige Drucktankvorrichtungen werden beispielsweise als Gashochdruckspeichersysteme zur Bereitstellung eines Kraftstoffes, wie Wasserstoff, zum Betrieb eines Kraftfahrzeuges verwendet.

### Stand der Technik

Derartige Drucktankvorrichtungen können über einen Hochdruckeingang betankt werden. Über einen Niederdruckausgang erfolgt die Entnahme des gespeicherten Mediums. Im Rahmen dieser Patentschrift wird unter dem Begriff "Hochdruckeingang" der gesamte Eingangsbereich zum Drucktank verstanden, in welchem zumindest abschnittsweise und bevorzugt überall ein hoher Druck herrscht und unter dem Begriff "Niederdruckausgang" der gesamte Ausgangsbereich vom Drucktank verstanden, in welchem zumindest abschnittsweise, nämlich stromabwärts beispielsweise eines Druckreglers, ein niedrigerer Druck herrscht. Dabei ist im Niederdruckausgang zumindest eine Entnahmekomponente angeordnet, die dazu dient, das im Drucktank gespeicherte Medium entsprechend den Anforderungen eines Abnehmers bereitzustellen. Die Entnahmekomponente ist üblicherweise ein Absperrventil, ein Mengenregler und/oder ein Druckregler. Diese Entnahmekomponenten nutzen in der Regel den anliegenden Druck aus dem Drucktank um den Niederdruckausgang zu verschließen, solange kein Medium aus dem Drucktank entnommen wird. Wenn es zu einem starken Druckanstieg kommt, können die Entnahmekomponenten jedoch undicht sein.

Insbesondere am Beginn eines Betankungsvorgangs derartiger Drucktanksysteme kommt es üblicherweise zu einem starken Druckanstieg sowohl im Hochdruckeingang als auch im Niederdruckausgang stromaufwärts der Entnahmekomponente. Ein kurzer Druckimpuls wird in der Regel am Beginn eines Betankungsvorgangs von einer Betankungsanlage abgesetzt um Eigenschaften wie die Dichtheit und das zur Verfügung stehende Tankvolumen des Drucktanks zu ermitteln. Durch diesen raschen Druckanstieg kann es zur oben erwähnten Undichtheit an der Entnahmekomponente und in weiterer Folge zu Beschädigungen am an den Niederdruckausgang angeschlossenen Abnehmer des gespeicherten Mediums kommen.

Eine Drucktankvorrichtung gemäß dem Oberbegriff des Anspruchs 1 ist aus der US 2002/096212 A1 bekannt.

### Zusammenfassung der Erfindung

Es ist eine Aufgabe der Erfindung, Drucktankvorrichtungen der genannten Art in dieser Hinsicht zu verbessern und insbesondere eine Drucktankvorrichtung anzugeben, die Schäden der Verbraucher beim Betanken der Drucktankvorrichtung verhindert.

Die Lösung der Aufgabe erfolgt durch eine Drucktankvorrichtung umfassend einen Drucktank, einen Hochdruckeingang zum Drucktank und einen Niederdruckausgang vom Drucktank, wobei im Niederdruckausgang zumindest eine Entnahmekomponente angeordnet ist, wobei im Niederdruckausgang stromaufwärts der Entnahmekomponente ein Sperrventil angeordnet ist, wobei durch das Sperrventil zumindest eine Hauptströmungsverbindung vom Drucktank zur Entnahmekomponente verschließbar ist, wobei das Sperrventil derart mit dem Hochdruckeingang wirkverbunden ist, dass das Sperrventil bei einem vorgegebenen Druckanstieg am Hochdruckeingang die Hauptströmungsverbindung verschließt.

Erfindungsgemäß ist vorgesehen, dass ein Druckanstieg am Hochdruckeingang, wie er insbesondere am Beginn einer Betankung des Drucktanks auftritt, detektiert wird und daraufhin ein Sperrventil, welches in Strömungsrichtung vor einer Entnahmekomponente im Niederdruckausgang angeordnet ist, geschlossen wird. Hierdurch können Undichtigkeiten an der Entnahmekomponente sowie Folgeschäden an einem Abnehmer des Speichermediums im Drucktank verhindert werden.

Die Entnahmekomponente kann insbesondere ein Absperrventil, ein Mengenregler und/oder ein Druckregler sein. Bevorzugt kann es sich um ein oder mehrere elektromechanische Absperrventile, Mengenregler und/oder Druckregler handeln.

Besonders bevorzugt ist im Hochdruckeingang ein Rückschlagventil angeordnet und das Sperrventil ist derart mit dem Rückschlagventil wirkverbunden, dass das Sperrventil bei einer vorgegebenen Öffnung des Rückschlagventils die Hauptströmungsverbindung verschließt. Ein Rückschlagventil im Hochdruckeingang einer derartigen Drucktankvorrichtung, welches bei einer Betankung öffnet, außerhalb der Betankungszeiten jedoch durch den Druck im Drucktank geschlossen ist, kann somit auch als Indikator für den Druckanstieg genutzt werden aufgrund dessen das Sperrventil geschlossen werden soll und als Auslöser für das Schließen des Sperrventils.

Die vorgegebene Öffnung des Rückschlagventils kann insbesondere ein vorgegebener Öffnungsweg oder eine vorgegebene Öffnungskraft des Rückschlagventils sein, das heißt das Sperrventil kann entweder bei jedem Öffnen des Rückschlagventils (beliebig kleiner Öffnungsweg) schließen oder auch nur wenn der Verschlusskörper des Rückschlagventils einen vorbestimmten Öffnungsweg zurückgelegt hat oder mit einer vorbestimmten Öffnungskraft, durch einen bestimmten anliegenden Minimaldruck am Hochdruckeingang, geöffnet wird.

Besonders bevorzugt ist das Sperrventil mit dem Rückschlagventil mechanisch verbunden. Insbesondere sind bevorzugt die Verschlusskörper von Sperrventil und Rückschlagventil miteinander mechanisch verbunden, so dass eine Öffnung des Rückschlagventils mechanisch zum Schließen des Sperrventils führt.

Bevorzugt ist das Sperrventil mit dem Rückschlagventil über einen Verbindungskörper verbunden.

Besonders bevorzugt ist dieser Verbindungskörper mit dem Verschlusskörper des Rückschlagventils und dem Verschlusskörper des Sperrventils einstückig ausgeführt. Der Verbindungskörper stellt dann einen den beiden Ventilen gemeinsamen Verschlusskörper dar, der beispielsweise als ovaler Vollkörper ausgeführt sein kann.

Besonders bevorzugt ist das Rückschlagventil durch eine Rückstellfeder in Schließrichtung vorgespannt um die Funktionalität des Rückschlagventils zu gewährleisten. Die Rückstellfeder kann dazu im Bereich des Verschlusskörpers des Rückschlagventils angeordnet sein, sie kann jedoch auch im Bereich des Verschlusskörpers des Sperrventils angeordnet sein.

Bevorzugt ist, zumindest bei durch das Sperrventil verschlossener Hauptströmungsverbindung, eine Nebenströmungsverbindung vom Drucktank zur Entnahmekomponente geöffnet. Auf diese Weise kann stromabwärts des Sperrventils ein zulässiger Druckanstieg erfolgen, so dass insbesondere zusammen mit einer geeigneten Rückstellfeder eine Rückstellung des Verschlusskörpers des Rückschlagventils nach einer Betankung sichergestellt ist, wobei unerwünschte Druckimpulse an der Entnahmekomponente vermieden werden.

Die Nebenströmungsverbindung kann ein Durchlass im Sperrventil, also eine gezielte Undichtigkeit beispielsweise des Verschlusskörpers des Sperrventils und/oder ein Umgehungskanal zwischen Drucktank und Entnahmekomponente, der insbesondere in einem Ventilgehäuse verlaufen kann, sein.

Das Rückschlagventil und das Sperrventil können, insbesondere zusammen mit einem gemeinsamen Verbindungskörper, in einem gemeinsamen Ventilgehäuse angeordnet sein.

Eine erfindungsgemäße Drucktankvorrichtung kann beispielsweise in einem Kraft-, Luft-, Wasser- oder Schienenfahrzeug sowie auch in stationären Anlagen eingesetzt werden.

Weiterbildungen der Erfindung sind in den abhängigen Ansprüchen, der Beschreibung sowie den beigefügten Zeichnungen angegeben.

### Kurzbeschreibung der Zeichnungen

Die Erfindung wird im Folgenden beispielhaft unter Bezugnahme auf die Zeichnungen beschrieben.
- Fig. 1: ist eine schematische Darstellung einer erfindungsgemäßen Drucktankvorrichtung.
- Fig. 2: ist eine schematische Darstellung einer weiteren erfindungsgemäßen Drucktankvorrichtung.
- Fig. 3: ist eine schematische Darstellung einer weiteren erfindungsgemäßen Drucktankvorrichtung.

### Detaillierte Beschreibung der Erfindung

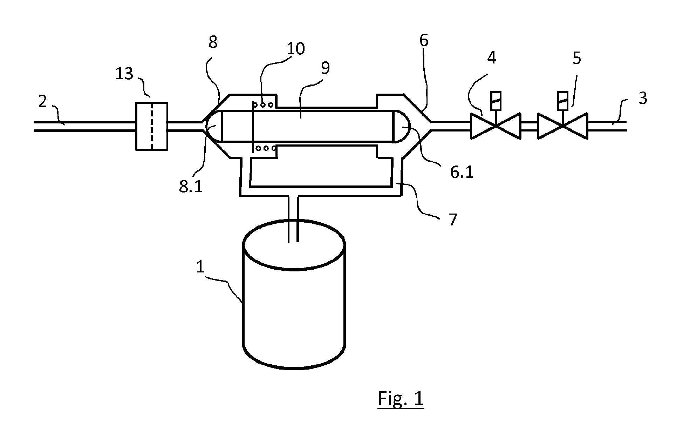

In Fig. 1 ist eine erfindungsgemäße Drucktankvorrichtung dargestellt, mit einem Drucktank 1, der über einen Hochdruckeingang 2, der ein Filter 13 umfassen kann, betankbar ist und mit einem Niederdruckausgang 3 zur Entnahme eines im Drucktank 1 gespeicherten Gases für einen Verbraucher. Im Niederdruckausgang 3 sind als Entnahmekomponenten 4, 5 ein Absperrventil 4 und ein Mengen- und / oder Druckregler 5 angeordnet.

Im Niederdruckausgang 3 ist stromaufwärts der Entnahmekomponenten 4, 5 ein Sperrventil 6 angeordnet, mit einem Verschlusskörper 6.1 der auf einem Ventilsitz des Sperrventils 6 aufsitzen kann um eine Hauptströmungsverbindung 7 zwischen Drucktank 1 und Entnahmekomponente 4, 5, also die Verbindung zum Niederdruckausgang 3, zu verschließen. Das Sperrventil 6 ist mit einem Rückschlagventil 8 im Hochdruckeingang 2 wirkverbunden. Der Verschlusskörper 8.1 des Rückschlagventils 8 bildet zusammen mit dem Verschlusskörper 6.1 des Sperrventils 6 und einem Verbindungskörper 9 ein gemeinsames Bauteil, welches bei Druckbeaufschlagung auf Seite des Hochdruckeingangs 2 in der Fig. 1 nach rechts, also zum Ventilsitz des Sperrventils 6 verschoben wird. Dadurch wird gleichzeitig das Rückschlagventil 8 geöffnet und das Sperrventil 6 geschlossen. Ein Druckanstieg, insbesondere ein Druckimpuls beim Beginn einer Betankung, wird somit nicht vom Hochdruckeingang 2 zum Niederdruckbereich des Niederdruckausgangs 3 und insbesondere nicht zu den Entnahmekomponenten 4 und 5 weitergeleitet. Das aus den Verschlusskörpern 6.1 und 8.1 und dem Verbindungskörper 9 gebildete ovale Dichtbauteil wird durch eine Rückstellfeder 10 in Richtung auf den Ventilsitz des Rückschlagventils 8, in der Fig. 1 also nach links, belastet, um ein Schließen des Rückschlagventils 8 und ein Öffnen des Sperrventils 6 zu ermöglichen.

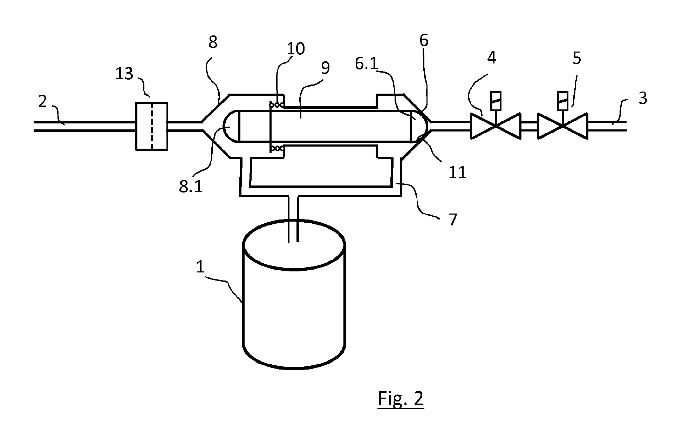

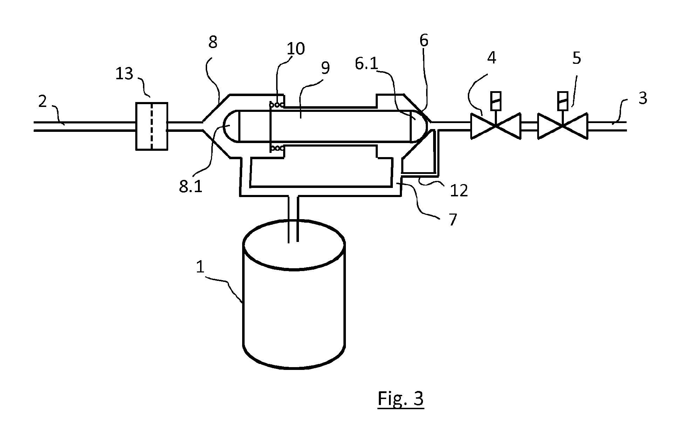

Um das Schließen des Rückschlagventils 8 und das Öffnen des Sperrventils 6 zu erleichtern, kann beispielsweise, wie in Fig. 2 dargestellt, das Sperrventil 6 einen Durchlass 11 aufweisen, beispielsweise eine gezielte Undichtheit des Sperrventils 6, und/oder, wie in Fig. 3 dargestellt, einen Umgehungskanal 12, also eine Bypass-Bohrung zwischen Drucktank 1 und Entnahmekomponente 4, 5. Dadurch besteht auch bei geschlossenem Sperrventil 6, wie in den Fig. 2 und Fig. 3 dargestellt, eine geöffnete Nebenströmungsverbindung vom Drucktank 1 in den Bereich stromabwärts des Sperrventils 6. Hierdurch wird jenseits des Sperrventils 6 ein Druckanstieg ermöglicht, der das Schließen des Rückschlagventils 8 erleichtert, dabei aber Druckspitzen beim Beginn einer Betankung nicht an das Absperrventil 4 und den Mengen- und / oder Druckregler 5 weitergegeben.

Die Erfindung gibt somit eine Drucktankvorrichtung an, die Schäden der nachgeschalteten Verbraucher beim Betanken der Drucktankvorrichtung verhindert.

### Bezugszeichenliste

- 1: Drucktank
- 2: Hochdruckeingang
- 3: Niederdruckausgang
- 4: Absperrventil
- 5: Mengen- und / oder Druckregler
- 6: Sperrventil
- 6.1: Verschlusskörper
- 7: Hauptströmungsverbindung
- 8: Rückschlagventil
- 8.1: Verschlusskörper
- 9: Verbindungskörper
- 10: Rückstellfeder
- 11: Durchlass
- 12: Umgehungskanal
- 13: Filter

## Patentansprüche

1. Drucktankvorrichtung umfassend einen Drucktank (1), einen Hochdruckeingang (2) zum Drucktank (1) und einen Niederdruckausgang (3) vom Drucktank (1), wobei im Niederdruckausgang (3) zumindest eine Entnahmekomponente (4, 5) angeordnet ist, **dadurch gekennzeichnet, dass** im Niederdruckausgang (3) stromaufwärts der Entnahmekomponente (4, 5) ein Sperrventil (6) angeordnet ist, wobei durch das Sperrventil (6) zumindest eine Hauptströmungsverbindung (7) vom Drucktank (1) zur Entnahmekomponente (4, 5) verschließbar ist, wobei das Sperrventil (6) derart mit dem Hochdruckeingang (2) wirkverbunden ist, dass das Sperrventil (6) bei einem vorgegebenen Druckanstieg am Hochdruckeingang (2) die Hauptströmungsverbindung (7) verschließt.

2. Drucktankvorrichtung nach Anspruch 1,
**dadurch gekennzeichnet, dass** die Entnahmekomponente (4, 5) ein Absperrventil (4), ein Mengenregler und/oder ein Druckregler (5) ist.

3. Drucktankvorrichtung nach Anspruch 1 oder 2,
**dadurch gekennzeichnet, dass** im Hochdruckeingang (2) ein Rückschlagventil (8) angeordnet ist und das Sperrventil (6) derart mit dem Rückschlagventil (8) wirkverbunden ist, dass das Sperrventil (6) bei einer vorgegebenen Öffnung des Rückschlagventils (8) die Hauptströmungsverbindung (7) verschließt.

4. Drucktankvorrichtung nach Anspruch 3,
**dadurch gekennzeichnet, dass** die vorgegebene Öffnung des Rückschlagventils (8) ein vorgegebener Öffnungsweg oder eine vorgegebene Öffnungskraft des Rückschlagventils (8) ist.

5. Drucktankvorrichtung nach zumindest einem der Ansprüche 3 bis 4,
**dadurch gekennzeichnet, dass** das Sperrventil (6) mit dem Rückschlagventil (8) mechanisch verbunden ist.

6. Drucktankvorrichtung nach zumindest einem der Ansprüche 3 bis 5,
**dadurch gekennzeichnet, dass** das Sperrventil (6) mit dem Rückschlagventil (8) über einen Verbindungskörper (9) verbunden ist.

7. Drucktankvorrichtung nach Anspruch 6,
**dadurch gekennzeichnet, dass** der Verbindungskörper (9) mit einem Verschlusskörper (8.1) des Rückschlagventils (8) und einem Verschlusskörper (6.1) des Sperrventils (6) einstückig ausgeführt ist.

8. Drucktankvorrichtung nach zumindest einem der Ansprüche 3 bis 7,
**dadurch gekennzeichnet, dass** das Rückschlagventil (8) durch eine Rückstellfeder (10) in Schließrichtung vorgespannt ist.

9. Drucktankvorrichtung nach zumindest einem der zuvor genannten Ansprüche,
**dadurch gekennzeichnet, dass** zumindest bei durch das Sperrventil (6) verschlossener Hauptströmungsverbindung (7) eine Nebenströmungsverbindung (11, 12) vom Drucktank (1) zur Entnahmekomponente (4, 5) geöffnet ist.

10. Drucktankvorrichtung nach Anspruch 9,
**dadurch gekennzeichnet, dass** die Nebenströmungsverbindung (11, 12) ein Durchlass (11) im Sperrventil (6) und/oder ein Umgehungskanal (12) zwischen Drucktank (1) und Entnahmekomponente (4, 5) ist.

11. Drucktankvorrichtung nach Anspruch 10,
**dadurch gekennzeichnet, dass** der Durchlass (11) im Sperrventil (6) durch eine gezielte Undichtigkeit, also Ausnehmung im Ventilsitz des Sperrventils (6) und / oder im Verschlußkörper (6.1), gebildet ist.

12. Drucktankvorrichtung nach zumindest einem der Ansprüche 3 bis 11,
**dadurch gekennzeichnet, dass** das Rückschlagventil (8) und das Sperrventil (6) in einem gemeinsamen Ventilgehäuse angeordnet sind.

## Claims

1. Pressure tank device comprising a pressure tank (1), a high pressure inlet (2) to the pressure tank (1) and a low pressure outlet (3) from the pressure tank (1), at least one removal component (4, 5) being arranged in the low pressure outlet (3), **characterized in that** a shut-off valve (6) is arranged in the low pressure outlet (3) upstream of the removal component (4, 5), it being possible for at least main flow connection (7) from the pressure tank (1) to the removal component (4, 5) to be closed by way of the shut-off valve (6), the shut-off valve (6) being operatively connected to the high pressure inlet (2) in such a way that the shut-off valve (6) closes the main flow connection (7) in the case of a predefined pressure rise at the high pressure inlet (2).

2. Pressure tank device according to Claim 1, **characterized in that** the removal component (4, 5) is a stop valve (4), a volume regulator and/or a pressure regulator (5).

3. Pressure tank device according to Claim 1 or 2, **characterized in that** a non-return valve (8) is arranged in the high pressure inlet (2), and the shut-off valve (6) is operatively connected to the non-return valve (8) in such a way that the shut-off valve (6) closes the main flow connection (7) in the case of a predefined opening of the non-return valve (8).

4. Pressure tank device according to Claim 3, **characterized in that** the predefined opening of the non-return valve (8) is a predefined opening travel or a predefined opening force of the non-return valve (8).

5. Pressure tank device according to at least either of Claims 3 and 4, **characterized in that** the shut-off valve (6) is connected mechanically to the non-return valve (8).

6. Pressure tank device according to at least one of Claims 3 to 5, **characterized in that** the shut-off valve (6) is connected to the non-return valve (8) via a connecting body (9).

7. Pressure tank device according to Claim 6, **characterized in that** the connecting body (9) is configured in one piece with a closure body (8.1) of the non-return valve (8) and a closure body (6.1) of the shut-off valve (6).

8. Pressure tank device according to at least one of Claims 3 to 7, **characterized in that** the non-return valve (8) is prestressed in the closing direction by way of a restoring spring (10).

9. Pressure tank device according to at least one of the preceding claims, **characterized in that** an auxiliary flow connection (11, 12) from the pressure tank (1) to the removal component (4, 5) is open at least when the main flow connection (7) is closed by way of the shut-off valve (6).

10. Pressure tank device according to Claim 9, **characterized in that** the auxiliary flow connection (11, 12) is a passage (11) in the shut-off valve (6) and/or a bypass duct (12) between the pressure tank (1) and the removal component (4, 5).

11. Pressure tank device according to Claim 10, **characterized in that** the passage (11) in the shut-off valve (6) is formed by way of a targeted leak, that is to say a recess in the valve seat of the shut-off valve (6) and/or in the closure body (6.1).

12. Pressure tank device according to at least one of Claims 3 to 11, **characterized in that** the non-return valve (8) and the shut-off valve (6) are arranged in a common valve housing.

## Revendications

1. Dispositif de réservoir de pression comprenant un réservoir de pression (1), une entrée haute pression (2) dans le réservoir de pression (1) et une sortie basse pression (3) du réservoir de pression (1), au moins un composant de prélèvement (4, 5) étant disposé dans la sortie basse pression (3),
**caractérisé en ce que** dans la sortie basse pression (3), en amont du composant de prélèvement (4, 5), est disposée une vanne d'arrêt (6), au moins une connexion d'écoulement principal (7) du réservoir de pression (1) au composant de prélèvement (4, 5) pouvant être fermée par la vanne d'arrêt (6), la vanne d'arrêt (6) étant en liaison fonctionnelle avec l'entrée haute pression (2) de telle sorte que la vanne d'arrêt (6), dans le cas d'une augmentation prédéfinie de pression au niveau de l'entrée haute pression (2), ferme la connexion d'écoulement principal (7).

2. Dispositif de réservoir de pression selon la revendication 1,
**caractérisé en ce que** le composant de prélèvement (4, 5) est une vanne de blocage (4), un régulateur de volume et/ou un régulateur de pression (5).

3. Dispositif de réservoir de pression selon la revendication 1 ou 2,
**caractérisé en ce que** dans l'entrée haute pression (2) est disposé un clapet anti-retour (8) et la vanne d'arrêt (6) est en liaison fonctionnelle avec le clapet anti-retour (8) de telle sorte que la vanne d'arrêt (6), lors d'une ouverture prédéfinie du clapet anti-retour (8), ferme la connexion d'écoulement principal (7).

4. Dispositif de réservoir de pression selon la revendication 3,
**caractérisé en ce que** l'ouverture prédéfinie du clapet anti-retour (8) est une course d'ouverture prédéfinie ou une force d'ouverture prédéfinie du clapet anti-retour (8).

5. Dispositif de réservoir de pression selon au moins l'une quelconque des revendications 3 à 4, **caractérisé en ce que** la vanne d'arrêt (6) est connectée mécaniquement au clapet anti-retour (8).

6. Dispositif de réservoir de pression selon au moins l'une quelconque des revendications 3 à 5, **caractérisé en ce que** la vanne d'arrêt (6) est connectée au clapet anti-retour (8) par le biais d'un corps de liaison (9).

7. Dispositif de réservoir de pression selon la revendication 6,
**caractérisé en ce que** le corps de liaison (9) est réalisé d'une seule pièce avec un corps de fermeture (8.1) du clapet anti-retour (8) et un corps de fermeture (6.1) de la vanne d'arrêt (6).

8. Dispositif de réservoir de pression selon au moins l'une quelconque des revendications 3 à 7, **caractérisé en ce que** le clapet anti-retour (8) est précontraint par un ressort de rappel (10) dans la direction de fermeture.

9. Dispositif de réservoir de pression selon au moins l'une quelconque des revendications précédentes, **caractérisé en ce qu'**au moins lorsque la liaison d'écoulement principal (7) est fermée par la vanne d'arrêt (6), une liaison d'écoulement secondaire (11, 12) du réservoir de pression (1) au composant de prélèvement (4, 5) est ouverte.

10. Dispositif de réservoir de pression selon la revendication 9,
**caractérisé en ce que** la liaison d'écoulement secondaire (11, 12) est un passage (11) dans la vanne d'arrêt (6) et/ou un canal de contournement (12) entre le réservoir de pression (1) et le composant de prélèvement (4, 5).

11. Dispositif de réservoir de pression selon la revendication 10,
**caractérisé en ce que** le passage (11) dans la vanne d'arrêt (6) est formé par un défaut d'étanchéité spécifique, c'est-à-dire un évidement dans le siège de vanne de la vanne d'arrêt (6) et/ou dans le corps de fermeture (6.1).

12. Dispositif de réservoir de pression selon au moins l'une quelconque des revendications 3 à 11, **caractérisé en ce que** le clapet anti-retour (8) et la vanne d'arrêt (6) sont disposés dans un boîtier de vanne commun.
